# FASCICULE DE BREVET EUROPEEN

(11) **EP 2 986 880 B1**
(45) Date de publication et mention de la délivrance du brevet: **31.05.2017**
(21) Numéro de dépôt: 14723464.5
(22) Date de dépôt: 14.04.2014
(51) Int. Cl.: F16L 37/084, F16L 37/098

(54) **VERROU POUR RACCORDEMENT TUBULAIRE**
SCHLOSS FÜR EINE ROHRVERBINDUNG
LOCK FOR A TUBULAR CONNECTION

(30) Priorité: 17.04.2013 FR 1353466
(43) Date de publication de la demande: 24.02.2016
(73) Titulaire: A. RAYMOND ET CIE, 38000 Grenoble (FR)
(72) Inventeur: DEPLAN, Anaïs, F-38100 Grenoble (FR)
(74) Mandataire: Prugneau, Philippe
(86) Numéro de dépôt international: PCT/FR2014/050900
(87) Numéro de publication internationale: WO 2014/170590

(56) Documents cités:
- EP-A1- 2 497 991
- WO-A1-02/08656
- DE-A1- 19 727 518
- DE-A1-102006 030 428
- DE-B3-102004 062 207
- US-A1- 2013 008 539

## Description

### Domaine technique

L'invention concerne de façon générale un verrou pour raccordement tubulaire, par exemple pour des canalisations de transport de fluide, et un raccord tubulaire obtenu, utilisés en particulier dans le domaine automobile par exemple pour le raccordement de l'injecteur de carburant, du filtre, du radiateur ou de tout autre équipement adapté et/ou dans tout autre domaine technique similaire.

### Technique antérieure

De tels verrous pour raccordement tubulaire et de tels raccords tubulaires sont connus notamment des publications US 6,086,119 et US 5,374,088 et illustrés par les figures1 à 3. Ces verrous 1 sont destinés à bloquer axialement un second élément tubulaire 2 dans un premier élément tubulaire 3 de sorte à assurer leur raccordement fluidique.

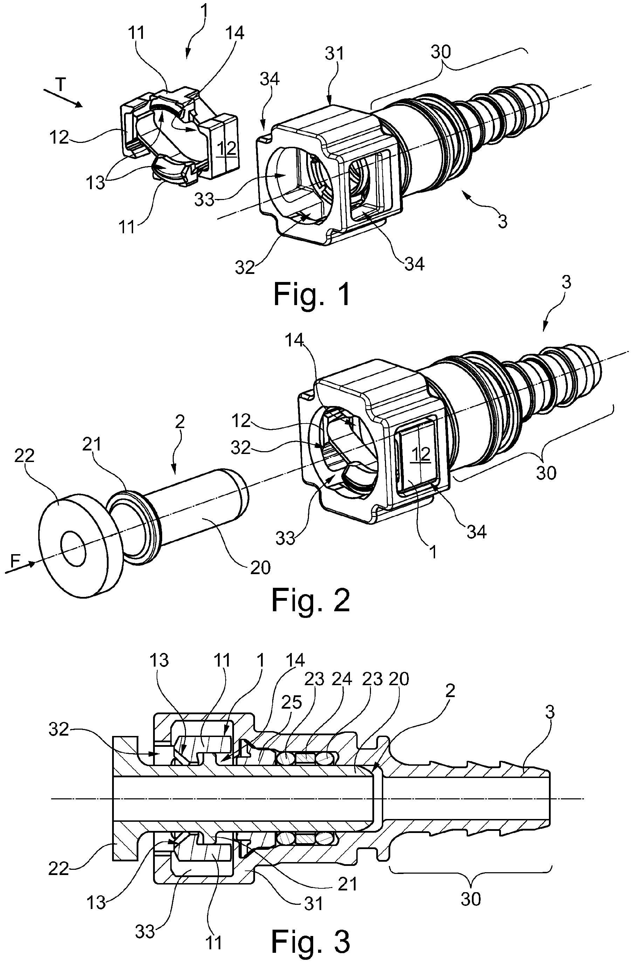

Chaque premier élément tubulaire 3 comporte un embout mâle 30 axial solidaire d'un boîtier 31 pourvu d'un orifice axial 32 prévu dans l'alignement axial de l'embout mâle 30 du premier élément tubulaire 3. Le boîtier 31 définit un logement 33 destiné à recevoir le verrou 1 et pourvu d'ouvertures latérales 34 autorisant l'insertion latérale du verrou 1, selon la flèche T de la figure 1.

Le verrou 1 présente globalement une forme en losange traversée par un orifice axial 14. Les cotés de cette forme en losange sont élastiquement déformables et pourvus en leur milieu d'étriers 11, et en leurs extrémités de barrettes d'appui 12. Ainsi, la forme en losange du verrou 1 peut être plus ou moins aplatie, notamment pour insérer latéralement le verrou 1, par les ouvertures latérales 34 dans le logement 33 du premier élément tubulaire 3, selon la flèche T de la figure 1. Après insertion, le verrou 1 se détend à l'intérieur du logement 33, les barrettes d'appui 12 étant alors logées dans les ouvertures latérales 34, les étriers 11 étant proéminents vers l'intérieur dans l'orifice axial 32 et vers l'extérieur pour bloquer le verrou 1 dans le logement 33.

Chaque second élément tubulaire 2 présente un embout mâle 20 axial, pourvu d'une nervure circulaire 21, et prolongé par exemple par un plateau de raccord 22. Le diamètre de l'embout mâle 20 du second élément tubulaire 2 est inférieur aux diamètres de l'embout mâle 30 du premier élément tubulaire 3 et de l'orifice axial 32 du verrou 1 dans lesquels il peut être reçu. Le second élément tubulaire 2 est engagé axialement au travers du verrou 1 dans le premier élément tubulaire 3. Les étriers 11 comportent des chanfreins intérieurs 13 agencés pour que, lors de l'engagement axial du second élément tubulaire 2 dans l'orifice axial 32, selon la flèche F de la figure 2, l'appui axial de la nervure circulaire 21 sur les étriers 11 provoque l'écartement radial des étriers 11, autorisant ainsi le passage de la nervure circulaire 21 entre les étriers 11 et l'introduction du second élément tubulaire 2 dans le premier élément tubulaire 3. Après franchissement de la nervure circulaire 21, les étriers 11 se rapprochent radialement entre eux, et se resserrent sur l'embout mâle 20 du second élément tubulaire 2, derrière la nervure circulaire 21. Les étriers 11 coopèrent alors avec la nervure circulaire 21 pour bloquer axialement le second élément tubulaire 2 par rapport au premier élément tubulaire 3, par l'intermédiaire du verrou 1. On obtient ainsi un raccord tubulaire tel qu'illustré figure 3. Les premier et second éléments tubulaires sont par ailleurs séparés par des joints 23 permettant de garantir l'étanchéité fluidique. Ces joints 23 sont par exemple séparés axialement l'un de l'autre par une entretoise annulaire 24 et bloqués dans le premier élément tubulaire 3 par une bague 25.

Pour garantir une bonne tenue à l'arrachement du raccordement tubulaire, les étriers 11 doivent être mécaniquement résistants ce qui entraine leur rigidité. Ainsi, les efforts d'emmanchement nécessaires pour provoquer la déformation élastiquement des étriers 11 lors du passage de la nervure circulaire 21 sont importants, rendant le verrou 1 difficile à utiliser. De plus, étant donné les tolérances dimensionnelles du diamètre de l'embout mâle 20 du second élément tubulaire 2, il est fréquent que l'appui axial ne soit pas centré par rapport à chaque étrier 1. Ainsi, l'effort d'engagement axial à fournir est supérieur.

### Exposé de l'invention

Le but de l'invention est de remédier à cet inconvénient en proposant un verrou pour raccordement tubulaire présentant une bonne résistance mécanique tout en ne nécessitant que des efforts d'emmanchement limités.

A cet effet, l'invention a pour objet un verrou pour raccordement tubulaire, le verrou étant destiné à être bloqué axialement dans un premier élément tubulaire et définissant un orifice axial destiné à recevoir un second élément tubulaire pourvu d'une nervure circulaire, le verrou comporte au moins un étrier élastiquement déformable pourvu d'un chanfrein intérieur prévu pour, lors de l'engagement axial du second élément tubulaire dans l'orifice axial, s'écarter radialement sous l'effet de l'appui axial de la nervure circulaire et autoriser le passage de la nervure circulaire puis se resserrer derrière la nervure circulaire et coopérer avec la nervure circulaire pour bloquer axialement le second élément tubulaire dans le premier élément tubulaire, caractérisé en ce que le étrier est pourvu d'au moins une nervure axiale en relief de largeur inférieure à la largeur de l'étrier et destinée à, lors de l'engagement axial, recevoir l'appui axial de la nervure circulaire en évitant tout appui axial de la nervure circulaire sur l'étrier en dehors de la nervure axiale.

L'idée à la base de l'invention est de prévoir, sur chaque étrier, une nervure axiale apte à reprendre et concentrer les efforts axiaux, de largeur inférieure à celle de l'étrier qui la porte. Ainsi, les frottements générés sont moins importants et l'emmanchement facilité. De plus, l'effort axial étant centré par les nervures axiales dans le plan médian de l'étrier, pour un même effort axial, l'écartement des étriers est facilité.

Le verrou selon l'invention peut avantageusement présenter les particularités suivantes :
- la nervure axiale s'étend axialement à partir de l'arête intérieure du chanfrein intérieur ;
- la nervure axiale présente une largeur d'au moins 0.1 mm et, la largeur totale de nervure(s) axiale(s) ne dépasse pas 50% de la largeur de l'étrier ;
- en son point culminant, le profil de la nervure axiale présente une épaisseur d'au moins 0.1 mm par rapport au profil du chanfrein intérieur de l'étrier, l'épaisseur étant considérée perpendiculairement à la surface du chanfrein intérieur ;
- la nervure axiale présente une épaisseur variable le long du chanfrein intérieur ;
- la nervure axiale présente un profil choisi dans le groupe comprenant un profil bombé, un profil simple pan, un profil multi-pans ;
- la nervure axiale unique est centrée dans le plan axial médian de l'étrier ;
- l'étrier comporte plusieurs nervures axiales réparties symétriquement de part et d'autre du plan axial médian de l'étrier ;
- le verrou comporte deux étriers axialement symétriques entre eux.

L'invention s'étend à un raccord tubulaire entre un premier élément tubulaire et un second élément tubulaire comportant un tel verrou.

### Présentation sommaire des dessins

La présente invention sera mieux comprise et d'autres avantages apparaîtront à la lecture de la description détaillée de plusieurs modes de réalisation pris à titre d'exemples nullement limitatifs et illustrés par les dessins annexés, dans lesquels :
- les figures 1, 2 et 3 sont des vues en perspective éclatée et en coupe d'un raccord tubulaire selon l'art antérieur, comportant un premier et un second élément tubulaire et un verrou, et illustré selon trois étapes de montage distinctes ;
- la figure 4 est une vue en perspective d'un verrou selon l'invention ;
- les figure 5 et 6 sont des vues de détail d'un verrou selon deux modes de réalisation de l'invention ;
- les figures 7 à 9 sont des vues en coupe illustrant trois étapes de montage d'un second élément tubulaire dans un verrou selon l'invention.

### Description des modes de réalisation

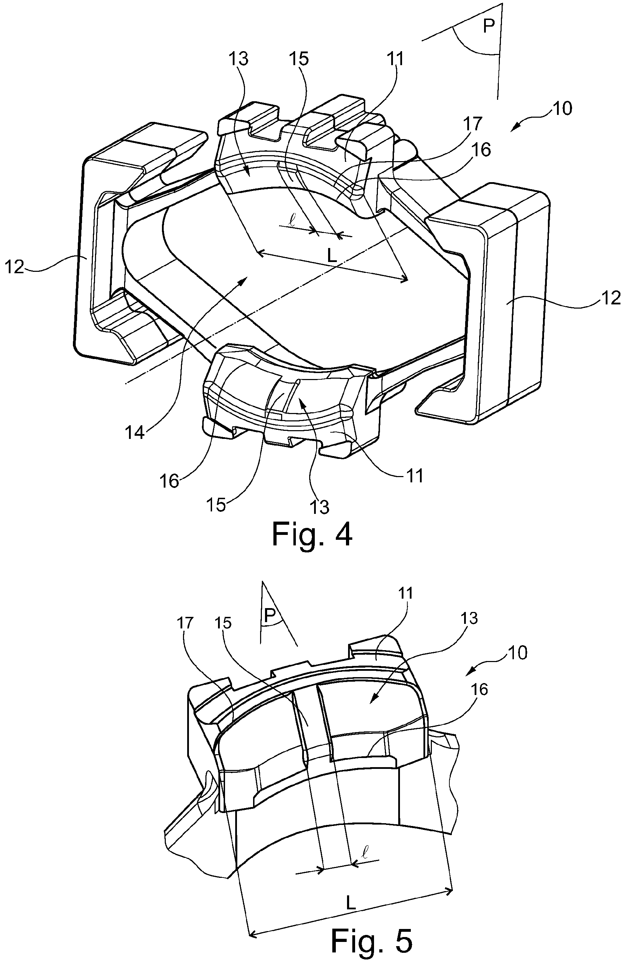

En référence aux figures 4 à 9, le verrou 10 selon l'invention est sensiblement similaire au verrou 1 des figures 1 à 3. Les éléments similaires portent les mêmes références. Chaque étrier 11 comporte une nervure axiale 15 prévue dans le plan axial médian P de l'étrier correspondant, en relief par rapport au profil du chanfrein intérieur 13, et s'étendant axialement à partir de l'arête intérieure 16 du chanfrein intérieur 13. Dans les exemples illustrés, les nervures axiales 15 s'étendent jusqu'à l'arête extérieure 17 du chanfrein intérieur 13. Toutefois, la nervure axiale peut être interrompue avant. Ainsi, la longueur axiale de la nervure axiale 15 est d'au moins 10% de la longueur axiale du chanfrein intérieur 13, à partir de l'arête intérieure 16 du chanfrein intérieur 13.

Chaque nervure axiale 15 présente une largeur ℓ inférieure à la largeur L de l'étrier 11 qui la porte. Cette largeur ℓ est d'au moins 0.1 mm et prévue de sorte que la largeur totale de la nervure axiale 15 ne dépasse pas 50% de la largeur de l'étrier 11 correspondant.

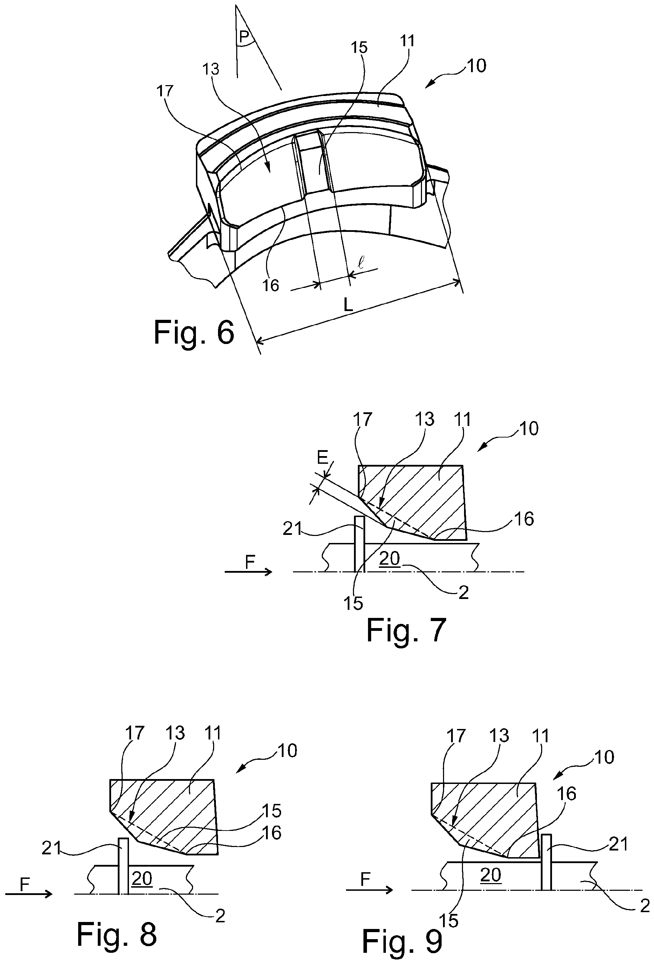

Chaque nervure axiale 15 présente en son point culminant, par rapport au profil du chanfrein intérieurs 13, une épaisseur E, illustrée sur la figure 7, d'au moins 0.1 mm lorsque cette épaisseur E est considérée perpendiculairement à la surface du chanfrein intérieurs 13.

Chaque nervure axiale 15 peut présenter une épaisseur évolutive le long du chanfrein telle qu'illustrée par la figure 5 ou une épaisseur constante telle qu'illustrée par la figure 6. De plus, chaque nervure axiale 15 peut présenter un profil bombé, un profil simple pan ou muti-pans tel qu'illustré.

Selon un mode de réalisation non représenté, le verrou comporte plusieurs nervures axiales. Dans ce cas, les nervures axiales sont réparties symétriquement de part et d'autre du plan axial médian de l'étrier. La largeur totale de toutes les nervures axiales d'un même étrier ne dépasse pas 50% de la largeur de ce même étrier. Les nervures axiales d'un même étrier sont séparées d'une distance pouvant aller d'au moins 0.1 mm jusqu'à la moitié de la largeur L de l'étrier.

Dans les exemples illustrés, le verrou comporte deux étriers pourvus chacun d'une nervure axiale. Le verrou peut également comporter un seul étier ou plusieurs étriers dont certains exempts de nervure axiale.

L'assemblage du verrou 10 selon l'invention sur un premier élément tubulaire 3 de type connu est obtenu tel que précédemment décrit pour les verrous 1 de l'art antérieur. Lors de l'engagement axial du second élément tubulaire 2 de type connu dans le verrou 10 selon l'invention, selon la flèche F, tel qu'illustré par les figures 7 à 9, la nervure circulaire 21 du second élément tubulaire 2 vient en contact sur la nervure axiale 15. La nervure circulaire 21 n'est pas en contact avec le reste de la surface de l'étrier 11. Ainsi, la nervure axiale 15 permet de garantir que les efforts sollicitant l'écartement des étriers 11 sont concentrés dans le plan axial médian P de chaque étrier 11 et repris par les seules nervures axiales 15, évitant ainsi tout risque de porte à faux sur l'un ou l'autre des bords des étriers 11. Pour un même effort d'engagement, l'écartement des étriers 11 est ainsi facilité. L'assemblage du raccord tubulaire avec un verrou 10 selon l'invention nécessite donc un effort moindre qu'avec les verrous 1 de l'art antérieur. L'invention permet ainsi d'atteindre les objectifs précédemment mentionnés en conservant la solidité du verrou 10, et en particulier des étriers, pour résister à tout effort d'arrachement, tout en facilitant l'emmanchement axial.

Il va de soi que la présente invention ne saurait être limitée à la description qui précède d'un de ses modes de réalisation, susceptibles de subir quelques modifications sans pour autant sortir du cadre de l'invention.

## Revendications

1. Verrou (10) pour raccordement tubulaire, ledit verrou (10) étant destiné à être bloqué axialement dans un premier élément tubulaire (3) et définissant un orifice axial (14) destiné à recevoir un second élément tubulaire (2) pourvu d'une nervure circulaire (21), ledit verrou (10) comporte au moins un étrier (11) élastiquement déformable pourvu d'un chanfrein intérieur (13) prévu pour, lors de l'engagement axial dudit second élément tubulaire (2) dans ledit orifice axial (14), s'écarter radialement sous l'effet de l'appui axial de ladite nervure circulaire (21) et autoriser le passage de ladite nervure circulaire (21) puis se resserrer derrière ladite nervure circulaire (21) et coopérer avec ladite nervure circulaire (21) pour bloquer axialement ledit second élément tubulaire (2) dans ledit premier élément tubulaire (3), **caractérisé en ce que** ledit chanfrein intérieur (13) dudit étrier (11) est pourvu d'au moins une nervure axiale (15) en relief de largeur (ℓ) inférieure à la largeur (L) dudit étrier (11) et destinée à, lors dudit engagement axial, recevoir l'appui axial de ladite nervure circulaire (21) en évitant tout appui axial de ladite nervure circulaire (21) sur ledit étrier (11) en dehors de ladite nervure axiale (15).

2. Verrou (10) selon la revendication 1, **caractérisé en ce que** ladite nervure axiale (15) s'étend axialement à partir de l'arête intérieure dudit chanfrein intérieur (13).

3. Verrou (10) selon la revendication 1, **caractérisé en ce que** ladite nervure axiale (15) présente une largeur (ℓ) d'au moins 0.1 mm et **en ce que**, la largeur totale de nervure(s) axiale(s) (15) ne dépasse pas 50% de la largeur (L) dudit étrier (11).

4. Verrou (10) selon l'une quelconque des revendications précédentes, **caractérisé en ce que**, en son point culminant, le profil de ladite nervure axiale (15) présente une épaisseur (E) d'au moins 0.1 mm par rapport au profil dudit chanfrein intérieur (13) dudit étrier (11), ladite épaisseur (E) étant considérée perpendiculairement à la surface dudit chanfrein intérieur (13).

5. Verrou (10) selon l'une quelconque des revendications précédentes, **caractérisé en ce que** de ladite nervure axiale (15) présente une épaisseur (E) variable le long dudit chanfrein intérieur (13).

6. Verrou (10) selon l'une quelconque des revendications précédentes, **caractérisé en ce que** ladite nervure axiale (15) présente un profil choisi dans le groupe comprenant un profil bombé, un profil simple pan, un profil multi-pans.

7. Verrou (10) selon l'une quelconque des revendications précédentes, **caractérisé en ce que** ladite nervure axiale (15) unique est centrée dans le plan axial médian (P) dudit étrier (11).

8. Verrou (10) selon l'une quelconque des revendications 1 à 7, **caractérisé en ce que** ledit étrier comporte plusieurs nervures axiales réparties symétriquement de part et d'autre du plan axial médian dudit étrier.

9. Verrou (10) selon l'une quelconque des revendications 1 à 8, **caractérisé en ce qu'**il comporte deux étriers axialement symétriques entre eux.

10. Raccord tubulaire, comportant un premier élément tubulaire (3) définissant un orifice axial (32) destiné à recevoir un second élément tubulaire (2) pourvu d'une nervure circulaire (21), un verrou (10) bloqué axialement dans ledit premier élément tubulaire (3) et pourvu d'au moins un étrier (11) élastiquement déformable pourvu d'un chanfrein intérieur (13) prévu pour, lors de l'engagement axial dudit second élément tubulaire (2) dans ledit orifice axial (14), s'écarter radialement sous l'effet de l'appui axial de ladite nervure circulaire (21) et autoriser le passage de ladite nervure circulaire (21) puis se resserrer derrière ladite nervure circulaire (21) et coopérer avec ladite nervure circulaire (21) pour bloquer axialement ledit second élément tubulaire (2) dans ledit premier élément tubulaire (3), **caractérisé en ce qu'**il comporte un verrou (10) selon au moins l'une quelconque des revendications précédentes.

## Patentansprüche

1. Schloss (10) für eine Rohrverbindung, wobei das Schloss (10) dazu bestimmt ist, axial in einem ersten röhrenförmigen Element (3) festgestellt zu werden, und eine axiale Öffnung (14) definiert, die dazu bestimmt ist, ein zweites röhrenförmiges Element (2), das mit einer kreisförmigen Rippe (21) versehen ist, aufzunehmen, wobei das Schloss (10) mindestens einen elastisch verformbaren Bügel (11) umfasst, der mit einer inneren Fase (13) versehen ist, die dazu vorgesehen ist, sich beim axialen Eingreifen des zweiten röhrenförmigen Elements (2) in die axiale Öffnung (14) radial unter der Wirkung der axialen Abstützung der kreisförmigen Rippe (21) zu entfernen und den Durchgang der kreisförmigen Rippe (21) zu gestatten, sich dann hinter der kreisförmigen Rippe (21) wieder zusammenzuziehen und mit der kreisförmigen Rippe (21) zusammenzuwirken, um das zweite röhrenförmige Element (2) axial in dem ersten röhrenförmigen Element (3) festzustellen, **dadurch gekennzeichnet, dass** die innere Fase (13) des Bügels (11) mit mindestens einer heraus ragenden axialen Rippe (15) mit einer geringeren Breite (I) als die Breite (L) des Bügels (11) versehen ist, die dazu bestimmt ist, beim axialen Eingreifen die axiale Abstützung der kreisförmigen Rippe (21) aufzunehmen, wobei jede axiale Abstützung der kreisförmigen Rippe (21) auf dem Bügel (11) außerhalb der axialen Rippe (15) vermieden wird.

2. Schloss (10) nach Anspruch 1, **dadurch gekennzeichnet, dass** sich die axiale Rippe (15) axial von der Innenkante der inneren Fase (13) aus erstreckt.

3. Schloss (10) nach Anspruch 1, **dadurch gekennzeichnet, dass** die axiale Rippe (15) eine Breite (I) von mindestens 0,1 mm aufweist, und dass die Gesamtbreite der axialen Rippe(n) (15) 50% der Breite (L) des Bügels (11) nicht überschreitet.

4. Schloss (10) nach einem der vorhergehenden Ansprüche, **dadurch gekennzeichnet, dass** das Profil der axialen Rippe (15) an seinem höchsten Punkt eine Dicke (E) von mindestens 0,1 mm in Bezug zum Profil der inneren Fase (13) des Bügels (11) aufweist, wobei die Dicke (E) senkrecht auf die Oberfläche der inneren Fase (13) betrachtet wird.

5. Schloss (10) nach einem der vorhergehenden Ansprüche, **dadurch gekennzeichnet, dass** die axiale Rippe (15) eine variable Dicke (E) entlang der inneren Fase (13) aufweist.

6. Schloss (10) nach einem der vorhergehenden Ansprüche, **dadurch gekennzeichnet, dass** die axiale Rippe (15) ein Profil aufweist, das aus der Gruppe, umfassend ein bombiertes Profil, ein einflächiges Profil, ein mehrflächiges Profil, ausgewählt ist.

7. Schloss (10) nach einem der vorhergehenden Ansprüche, **dadurch gekennzeichnet, dass** die einzige axiale Rippe (15) in der axialen Mittelebene (P) des Bügels (11) zentriert ist.

8. Schloss (10) nach einem der Ansprüche 1 bis 7, **dadurch gekennzeichnet, dass** der Bügel mehrere axiale Rippen umfasst, die symmetrisch beiderseits der axialen Mittelebene des Bügels verteilt sind.

9. Schloss (10) nach einem der Ansprüche 1 bis 8, **dadurch gekennzeichnet, dass** es zwei axial zueinander symmetrische Bügel umfasst.

10. Rohrverbindung, umfassend ein erstes röhrenförmiges Element (3), das eine axiale Öffnung (32) definiert, die dazu bestimmt ist, ein zweites röhrenförmiges Element (2), das mit einer kreisförmigen Rippe (21) versehen ist, aufzunehmen, wobei ein Schloss (10) axial in dem ersten röhrenförmigen Element (3) festgestellt ist und mindestens einen elastisch verformbaren Bügel (11) umfasst, der mit einer inneren Fase (13) versehen ist, die dazu vorgesehen ist, sich beim axialen Eingreifen des zweiten röhrenförmigen Elements (2) in die axiale Öffnung (14) radial unter der Wirkung der axialen Abstützung der kreisförmigen Rippe (21) zu entfernen und den Durchgang der kreisförmigen Rippe (21) zu gestatten, sich dann hinter der kreisförmigen Rippe (21) wieder zusammenzuziehen und mit der kreisförmigen Rippe (21) zusammenzuwirken, um das zweite röhrenförmige Element (2) axial in dem ersten röhrenförmigen Element (3) festzustellen, **dadurch gekennzeichnet, dass** sie ein Schloss (10) nach mindestens einem der vorhergehenden Ansprüche umfasst.

## Claims

1. A locking part (10) for locking a tubular connection, said locking part (10) being designed to be locked axially in a first tubular element (3) and defining an axial orifice (14) designed to receive a second tubular element (2) provided with a circular collar (21), said locking part (10) being provided with at least one cradle (11) that is elastically deformable and that is provided with an inside bevel (13) that is designed so that, while said second tubular element (2) is being engaged axially into said axial orifice (14), it moves away radially under the effect of said circular collar (21) pressing axially against it, and allows said circular collar (21) to go past, and it then moves back in to clamp behind said circular collar (21) and to co-operate with said circular collar (21) to lock said second tubular element (2) axially in said first tubular element (3), said locking part being **characterized in that** said inside bevel (13) of said cradle (11) is provided with at least one axial ridge (15) extending in relief and of width (ℓ) less than the width (L) of said cradle (11), and designed so that, during said axial engagement, it receives the axial thrust from said circular collar (21) while avoiding any axial thrust from said circular collar (21) on said cradle (11) outside said axial ridge (15).

2. A locking part (10) according to claim 1, **characterized in that** said axial ridge (15) extends axially from the inner edge of said inside bevel (13).

3. A locking part (10) according to claim 1, **characterized in that** said axial ridge (15) has a width (f) of at least 0.1 mm, and **in that** the total width of axial ridge(s) (15) does not exceed 50% of the width (L) of said cradle (11).

4. A locking part (10) according to any preceding claim, **characterized in that**, at its peak, the profile of said axial ridge (15) has thickness (E) of at least 0.1 mm relative to the profile of said inside bevel (13) of said cradle (11), said thickness (E) being considered perpendicularly to the surface of said inside bevel (13).

5. A locking part (10) according to any preceding claim, **characterized in that** said axial ridge (15) has thickness (E) that varies along said inside bevel (13).

6. A locking part (10) according to any preceding claim, **characterized in that** said axial ridge (15) has a profile chosen from the group comprising a convex profile, a single-slope profile, and a multi-slope profile.

7. A locking part (10) according to any preceding claim, **characterized in that** said axial ridge (15) is a single ridge and is centered in the axial midplane (P) of said cradle (11).

8. A locking part (10) according to any one of claims 1 to 7, **characterized in that** said cradle is provided with a plurality of axial ridges distributed symmetrically on either side of the axial midplane of said cradle.

9. A locking part (10) according to any one of claims 1 to 8, **characterized in that** it is provided with two cradles that are axially symmetrical to each other.

10. A tubular connector comprising a first tubular element (3) defining an axial orifice (32) designed to receive a second tubular element (2) provided with a circular collar (21), and a locking part (10) locked axially in said first tubular element (3) and provided with at least one cradle (11) that is elastically deformable and that is provided with an inside bevel (13) that is designed so that, while said second tubular element (2) is being engaged axially into said axial orifice (32), it moves away radially under the effect of said circular collar (21) pressing axially against it, and allows said circular collar (21) to go past, and it then moves back in to clamp behind said circular collar (21) and to co-operate with said circular collar (21) to lock said second tubular element (2) axially in said first tubular element (3), said tubular connector being characterized it includes a locking part (10) according to any preceding claim.
